# EUROPÄISCHE PATENTSCHRIFT

(11) **EP 0 414 124 B1**
(45) Veröffentlichungstag und Bekanntmachung des Hinweises auf die Patenterteilung: **01.02.1995**
(21) Anmeldenummer: 90115671.1
(22) Anmeldetag: 16.08.1990
(51) Int. Cl.: C08L 79/08, C08L 67/03, C08L 71/00, C08L 65/00

(54) **Mehrkomponentenlegierung mit einer Glastemperatur**
Multicomponent alloy with a glass transition temperature
Alliage à plusieurs composants ayant une température à transition vitreuse

(30) Priorität: 19.08.1989 DE 3927399
(43) Veröffentlichungstag der Anmeldung: 27.02.1991
(73) Patentinhaber: HOECHST AKTIENGESELLSCHAFT, 65926 Frankfurt am Main (DE)
(72) Erfinder: Brekner, Michael-Joachim, Dr., D-6000 Frankfurt am Main (DE); Herrmann-Schönherr, Otto Dr., D-6140 Bensheim (DE)

(56) Entgegenhaltungen:
- EP-A- 0 117 327
- EP-A- 0 158 733
- EP-A- 0 257 150
- WO-A-85/01509
- WO-A-86/04079
- US-A- 4 250 279

## Beschreibung

Im Laufe der letzten Jahren ist eine große Zahl von Publikationen erschienen, die die Synthese und Eigenschaften von Polyarylethern beschreiben. Eine der frühesten Arbeiten befaßt sich mit der elektrophilen aromatischen Substitution aromatischer Dihalogenide mit unsubstituierten aromatischen Verbindungen wie Diphenylether (US-A 3,065,205). Von Johnson und Mitarbeitern (Journal of Polymer Science, A-1, 5, 1967, 2.415 - 2.427; US-A 4,107,837 und 4,175,175) werden nukleophile aromatische Substitutionen (Kondensationen) beschrieben. Dieser Syntheseweg führte zu einer neuen Klasse von Polyarylethern, den Polyaryletherketonen.

In den letzten Jahren hat das Interesse an Polaryletherketonen zugenommen, wie das Erscheinen einer Reihe von Publikationen zeigt: US 3,953,400; 3,956,240; 4,247,682; 4,320,224; 4,339,568; Polymer, 1981, 22, 1.096 - 1.103; Polymer, 1983, 24, 953 - 958.

Mehrere Polyaryletherketone sind bereits kommerziell erhältlich, beispielsweise solche mit folgender Struktur: 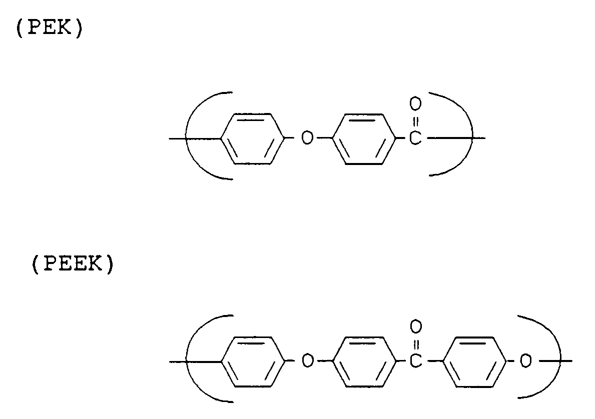
Polyaryletherketone sind also gut bekannt. Es handelt sich um eine wertvolle Polymerklasse mit hohem Eigenschaftsniveau. Sie zeichnen sich u.a. aus durch hohe thermische Resistenz, hydrolytische Stabilität und gute Lösemittelresistenz. Einige Polyaryletherketone sind hoch kristallin und zeigen Schmelztemperaturen von weit über 300°C. Polyaryletherketone können mit unterschiedlichen Schmelztemperaturen und Molekulargewichten synthetisiert werden.

Für einige Anwendungen, beispielsweise als Matrixmaterialien für Composites, sind höhere Glastemperaturen und niedrigere Schmelzeviskositäten wünschenswert. Es ist daher von großem technischem Interesse, Polyaryletherketone geeignet zu modifizieren, so daß sie einerseits höhere Glastemperaturen und andererseits verbesserte Schmelzeverarbeitbarkeit aufweisen. Außerdem ist wünschenswert, daß die Eigenschaften der Polaryletherketone und der modifizierten Polyaryletherketone - zum Beispiel Wasseraufnahme oder Schlagzähigkeit - von vergleichbarem Niveau sind.

Es ist bekannt, daß technologisch wichtige Eigenschaften von Polymeren, zum Beispiel die von den obengenannten, eingestellt werden können, indem man Polymere mit anderen Polymeren legiert. Die resultierenden Legierungen können in zwei grundsätzlich unterschiedliche Klassen eingeteilt werden. Die Klasse der nicht homogen gemischten Legierungen sind mehrphasig und zeigen in der Regel mehrere Glastemperaturen. Die Klasse der homogen gemischten Legierungen sind einphasig und zeigen in der Regel eine einzige, von der Zusammensetzung abhängige Glastemperatur. Für solche Legierungen mit einer einzigen, von der Zusammensetzung abhängigen Glastemperatur wird im nachfolgenden Text der Begriff homogen gemischt verwendet.

In der Technik besteht in diesem Zusammenhang besonders großes Interesse an Legierungen aus homogen gemischten Polymeren, da ihre technologischen Eigenschaften durch Variation der Komponenten und der Mischungsverhältnisse bestimmten Anforderungen gezielt angepaßt werden können (Olabisi, Robeson, Shaw : Polymer-Polymer-Miscibility, Academic Press, New York 1979).

Man ist bis heute jedoch weit davon entfernt, die homogene Mischbarkeit und die Eigenschaften einer Legierung aus den Eigenschaften der Einzelkomponenten gesichert vorhersagen zu können. Daher bleibt das Legieren von Polymeren weitgehend empirisch. Insbesondere ist die homogene Mischbarkeit der Komponenten in Legierungen trotz einer sehr großen Zahl von experimentellen und theoretischen Arbeiten auf diesem Gebiet nicht vorhersagbar.

So ist bekannt, daß Legierungen aus homogen mischbaren Polymeren selten sind (Journal of Polymer Science, Polymer Physics Edition, Vol. 21, S.11, 1983). In Macromolecules, Vol.16, S. 753, 1983, wird angegeben, daß im letzten Jahrzehnt die Zahl von Blendsystemen, die als homogen mischbar bekannt sind, zugenommen haben. Moderne Theorien seien jedoch bis zu diesem Zeitpunkt nur begrenzt erfolgreich gewesen, was die Vorhersagbarkeit der Mischbarkeit betrifft. Es werde daher bezweifelt, daß irgendeine praktische Theorie entwickelt werden könne, welche die realen Komplexitäten berücksichtige, die die Natur den Polymer - Polymer - Wechselwirkungen verleihe.

Demgegenüber sind die Methoden zur experimentellen Bestimmung der Mischbarkeit bekannt (Olabisi, Robeson, Shaw: Polymer-Polymer-Miscibility, Academic Press, New York, S. 321 - 327, 1979): Das eindeutigste Kriterium für homogene Mischbarkeit besteht in dem Auftreten einer einzigen Glastemperatur, die zwischen denen der zur Herstellung der Mischung verwendeten Komponenten liegt. Die Transparenz von Polymer-Legierungen in der Schmelze und, sofern diese nicht teilkristallin sind, im Festkörper ist ein Indiz, daß die Komponenten homogen gemischt vorliegen.

Es sind bereits Legierungen beschrieben worden aus Polyarylaten mit Polyimiden, die zusätzlich ein thermoplastisches Polymeres enthalten können (US-A 4,250,279). Die Menge dieser dritten Komponente beträgt lediglich maximal 40 Gewichtsprozent. Als Vorteil dieser Dreier-Mischungen wird angegeben, daß sie ein akzeptierbares Gleichgewicht der mechanischen Eigenschaften aufweisen. Werte für die Kombination mit Polyaryletherketonen, die einen Maßstab liefern würden, können der Veröffentlichung nicht entnommen werden. Auch wird nicht erwähnt, daß die in der vorliegenden Erfindung beschriebenen Legierungen in einem weiten Konzentrationsbereich homogen mischbar sind und sowohl erhöhte Glastemperaturen als auch niedrigere Schmelzeviskositäten aufweisen als die Polyaryletherketone allein.

Binäre mischbare Legierungen aus einem Polyaryletherketon und speziellen Polyimiden sind ebenfalls bekannt (EP-A 0,257,150). An dieser Veröffentlichung wird angeführt, daß das Zusetzen eines Polyaryletherketones die Schmelzeverarbeitbarkeit des Polyimides verbessert. Eigene Versuche haben gezeigt, daß die Fließfähigkeiten dieser Legierungen (MFI) jedoch entweder nur unwesentlich besser oder sogar schlechter als die der Polyaryletherketone allein sind. Beachtenswert ist aber, daß die Schmelzviskositäten bei der Verarbeitung, d. h. bei 360°C noch unwahrscheinlich hoch liegen. Die mehrkomponentigen Legierungen gemäß der Erfindung weisen dagegen Fließfähigkeiten auf, die wesentlich besser sind als die der Polyaryletherketone und die der binären Legierungen der obigen EP-Patentschrift.

Aufgabe der vorliegenden Erfindung ist es daher, Legierungen auf Basis von homogen gemischten Polyaryletherketonen und weiteren Polymeren mit erhöhter Glastemperatur und verbesserter Schmelzeverarbeitbarkeit, insbesondere zur Herstellung von Verbundwerkstoffen, bereitzustellen.

Es wurde nun überraschend gefunden, daß Polyaryletherketone mit Polyarylestern und Polyimiden in einem weiten Konzentrationsbereich miteinander homogen mischbar sind und Legierungen ergeben, die sowohl höhere Glastemperaturen als auch niedrigere Schmelzeviskositäten aufweisen als die Polyaryletherketone allein.

Die Erfindung betrifft somit Legierungen aus homogen gemischten Polymeren enthaltend
(a) mindestens ein Polyaryletherketon,
(b) mindestens ein Polyimid und
(c) mindestens einen Polyarylester.

Die einzelnen Komponenten werden in folgenden Mengen eingesetzt: Polyaryletherketone: 45 bis 98, vorzugsweise 60 bis 95 und insbesondere 75 bis 95 Gewichtsprozent; Polyimide: 1 bis 50, vorzugsweise 2 bis 35 und insbesondere 2 bis 20 Gewichtsprozent; Polyarylester: 1 bis 50, vorzugsweise 2 bis 35 und insbesondere 2 bis 20 Gewichtsprozent, jeweils bezogen auf die Gesamtlegierung.

Polaryletherketone a), die in den Legierungen der vorliegenden Erfindung eingesetzt werden können, enthalten eine oder mehrere Wiederholeinheiten der folgenden Formeln: 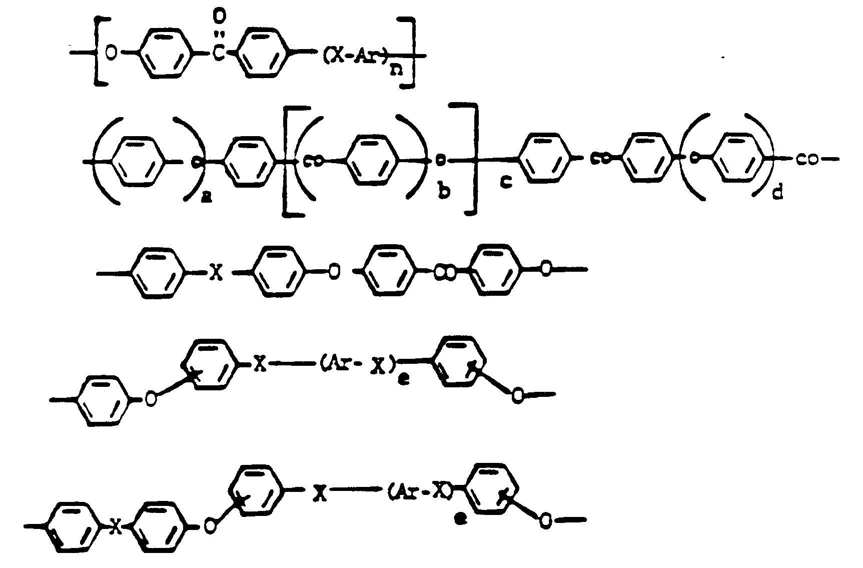
wobei Ar einen zweiwertigen aromatischen Rest darstellt, ausgewählt aus Phenylen, Biphenylen oder Naphthylen, und X unabhängig voneinander für O, CO oder eine direkte Bindung steht, n ist Null oder als ganze Zahl 1, 2 oder 3, b, c, d und e sind Null oder 1, a ist als ganze Zahl 1, 2, 3 oder 4 und d ist bevorzugt Null, falls b gleich 1 ist. Bevorzugte Polyaryletherketone weisen Wiederholeinheiten der folgenden Formeln auf: 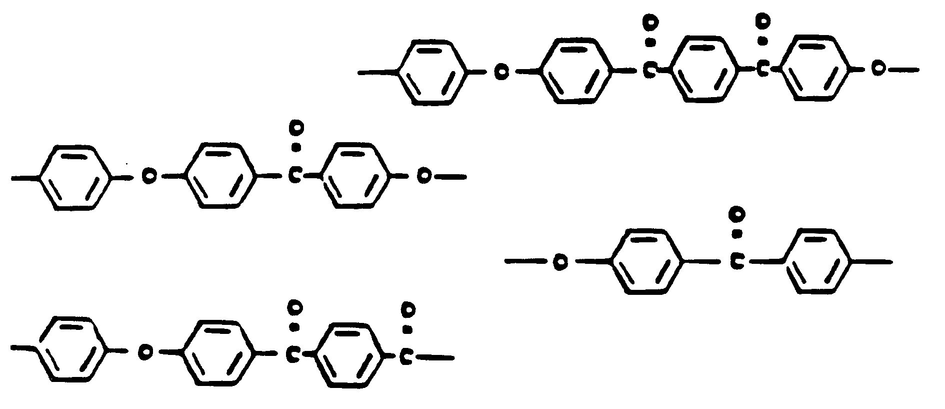 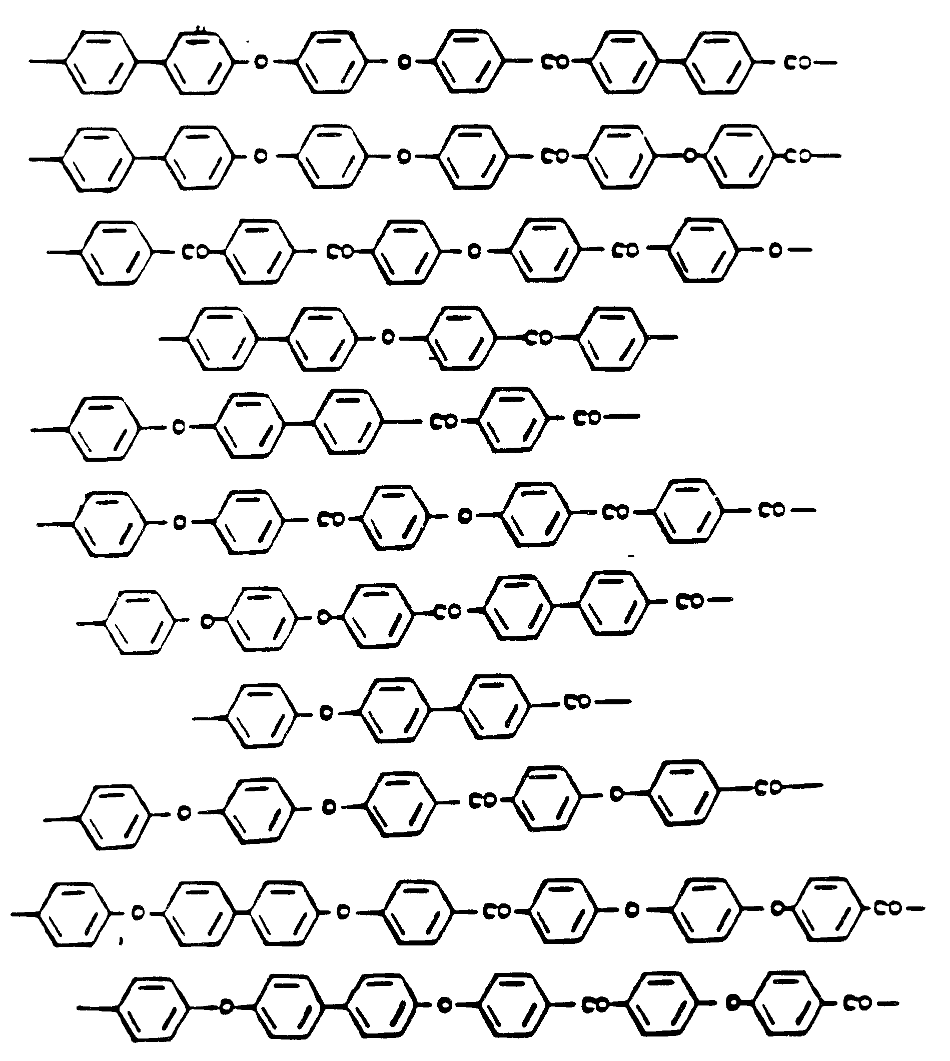
Diese Polyaryletherketone können nach bekannten Methoden synthetisiert werden, die beschrieben sind in CA-A 847,963; US-A 4,176,222; US-A 3,953,400; US-A 3,441,538; US-A 3,442,857; US-A 3,516,966; US-A 4,396,755; US-A 4,398,020.

Der Begriff Polyaryletherketone, wie er hier verwendet wird, schließt Homopolymere, Copolymere, Terpolymere und Blockcopolymere ein.

Die Polyaryletherketone haben Staudingerindices von 0,2 bis 5, bevorzugt von 0,5 bis 2,5 und besonders bevorzugt von 0,7 bis 2,0 dl/g, gemessen in 96 %iger Schwefelsäure bei 25°C.

Die Legierungen gemäß der Erfindung enthalten Polyimide b) mit Wiederholeinheiten der folgenden Formel: 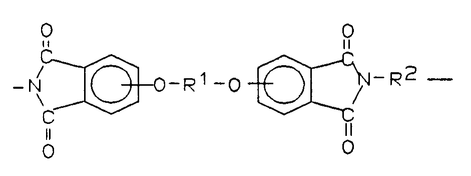
wobei R¹ ausgewählt ist aus
(α) einem substituierten oder unsubstituierten aromatischen Rest der folgenden Formeln 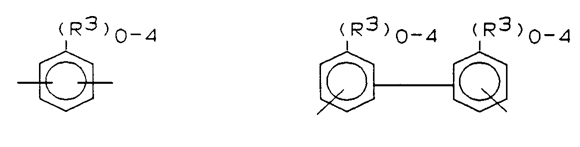 oder
(β) einem zweiwertigen Rest der allgemeinen Formel 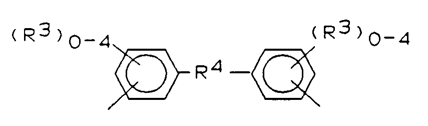 wobei R³ steht für C₁-C₆-Alkyl oder Halogen, und R⁴ steht für -O-, -S-, -CO-, -SO₂-, -SO-, Alkylen und Alkyliden mit jeweils 1 bis 6 Kohlenstoffatomen oder Cycloalkylen und Cycloalkyliden mit jeweils 4 bis 8 Kohlenstoffatomen. Die Indices "0-4" bei R³ bedeuten ganze Zahlen Null, eins, zwei drei oder vier.

R² ist ein aromatischer Kohlenwasserstoffrest mit 6 bis 20, vorzugsweise 6 bis 12 Kohlenstoffatomen, oder ein halogen-oder alkylsubstituiertes Derivat davon, wobei die Alkylgruppe 1 bis 6 Kohlenstoffatome enthält, ein Alkylen-oder Cycloalkylenrest mit 2 bis 20, vorzugsweise 2 bis 6 Kohlenstoffatomen oder ein zweiwertiger Rest der Formel 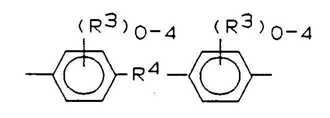
wobei R³ und R⁴ die obige Bedeutung haben und R⁴ auch eine direkte Bindung sein kann.

Weitere Polyimide, die für die Zwecke der Erfindung nützlich sind, umfassen solche mit folgenden Wiederholeinheiten der Formel 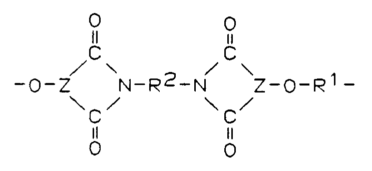
in der R¹ und R² wie oben definiert ist und wobei
-O-Z〈 für 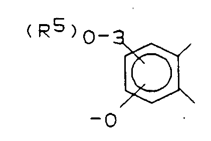
steht, wobei R⁵ unabhängig voneinander Wasserstoff, Alkyl oder Alkoxy mit 1 bis 6 C-Atomen im Alkylrest bedeutet (auch hier steht der Index "O-3" für ganze Zahlen Null, eins, zwei oder drei), oder 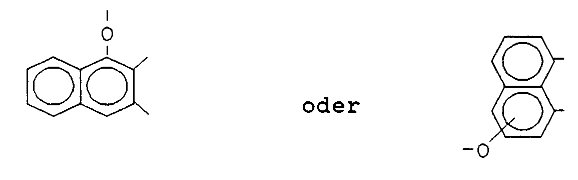
bedeutet, wobei der Sauerstoff mit einem der Ringe verknüpft ist und in ortho- oder para-Stellung zu einer der Bindungen der Imidcarbonylgruppe steht.

Bevorzugte Polyimide der Erfindung sind solche mit folgenden Wiederholeinheiten 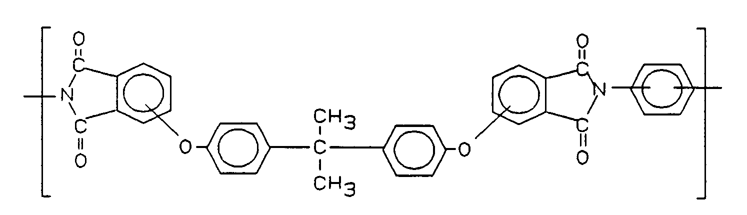
Der Begriff Polyimide, wie er hier verwendet wird, schließt Homopolymere, Copolymere, Terpolymere und Blockcopolymere ein. Die verwendeten Polyimide haben Staudingerindices von 0,1 bis 3 , bevorzugt von 0,3 bis 1,5 und insbesondere von 0,3 bis 1 dl/g, gemessen bei 25°C beispielsweise in N-Methylpyrrolidon oder Methylenchlorid.

Die Polyimide, die gemäß der vorliegenden Erfindung eingesetzt werden, sind bekannt. Ihre Synthese ist beispielsweise beschrieben in US 3,847,867; 3,847,869; 3,850,885; 3,852,242; 3,855,178; 3,887,558; 4,017,511; 4,024,110; 4,250,279.

Die Polyarylester c) können Polyestercarbonate sein, deren Synthesen beispielsweise in US 3,030,331; 3,169,121; 4,194,038 und 4,156,069 beschrieben sind. Es handelt sich um Copolyester, enthaltend Carbonatgruppen, Carboxylatgruppen und aromatische Gruppen, wobei wenigstens einige der Carboxylgruppen und wenigstens einige der Carbonatgruppen direkt mit den Ring-Kohlenstoffatomen der aromatischen Gruppen verbunden sind. Diese Polymere werden üblicherweise hergestellt durch Reaktion von difunktionellen Carbonsäuren mit Dihydroxyphenolen und Carbonatprecursoren.

Dihydroxyphenole zur Synthese von für die vorliegende Erfindung geeigneten Polyestercarbonaten besitzen die allgemeine Formel 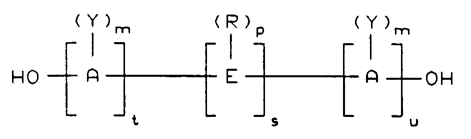
wobei A eine aromatische Gruppe bedeutet, wie Phenylen, Biphenylen oder Naphthylen und E ausgewählt ist aus Alkylen oder Alkyliden, wie Methylen, Ethylen, Isopropyliden. E kann auch aus zwei oder mehreren Alkylen- oder Alkyliden-Gruppen bestehen, verbunden durch eine Nicht-Alkylen- oder Nicht-Alkyliden-Gruppe, wie beispielsweise einer aromatischen Gruppe, einer tertiären Aminogruppe, einer Carbonylgruppe, einer Sulfidgruppe, einer Sulfoxidgruppe, einer Sulfongruppe oder einer Ethergruppe. Zusätzlich kann E eine cycloaliphatische Gruppe, eine Sulfidgruppe, eine Sulfoxidgruppe, eine Sulfongruppe, eine Etherbindung oder eine Carbonylgruppe sein.

R ist ausgewählt aus Wasserstoff, einer Alkylgruppe (C₁-C₃), einer Arylgruppe (C₆-C₁₂) oder einer cycloaliphatischen Gruppe. Y kann die Bedeutung von R haben oder ein Halogen oder eine Nitrogruppe sein. s, t und u sind unabhängig voneinander Null oder 1. m und p sind unabhängig voneinander Null oder eine ganze Zahl, die so groß ist, wie die maximal mögliche Zahl der Substituenten, die A oder E tragen können.

Wenn mehrere der mit Y bezeichneten Substituenten vorhanden sind, dann können diese gleich oder verschieden sein. Dasselbe gilt für R. Die Hydroxylgruppen und Y an den aromatischen Resten können para, meta oder ortho verknüpft sein.

Bevorzugte Dihydroxyphenole zur Herstellung der Polyarylester c) sind solche der Formel 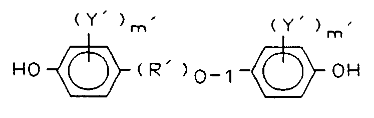
in der Y′ Alkyl mit 1 bis 4 Kohlenstoffatomen, Cycloalkyl mit 6 bis 12 Kohlenstoffatomen oder Halogen, vorzugsweise Chlor oder Fluor bedeuten. Jedes m′ ist unabhängig voneinander Null, 1, 2, 3 oder 4, vorzugsweise Null, und R′ ist Alkylen oder Alkyliden mit 1 bis 8, vorzugsweise 1 bis 4 Kohlenstoffatomen oder ein Arylenrest mit 6 bis 20, vorzugsweise 6 bis 12 Kohlenstoffatomen, insbesondere Alkyliden mit 3 Kohlenstoffatomen. Der Index "O-1" bedeutet Null oder 1.

Die Dihydroxyphenole können allein oder als Mischungen mindestens zweier Dihydroxyphenole verwendet werden.

Aromatische Dicarbonsäuren zur Synthese von für die vorliegende Erfindung geeigneten Polyarylester c) besitzen die allgemeine Formel:

HOOC - R˝ - COOH

wobei R˝ ausgewählt ist aus den Gruppen 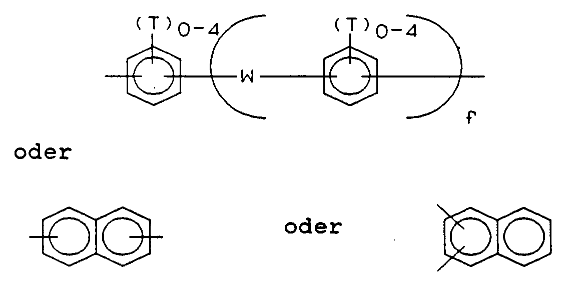
wobei f Null oder 1 ist und W für O, SO₂, CO, C(CH₃)₂, CH₂, S oder 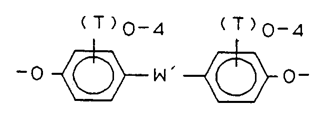
steht, wobei W′ die oben für W angegebene Bedeutung hat.

T ist in den Formeln ausgewählt aus Alkyl mit 1 bis 6 C-Atomen, vorzugsweise Methyl, Propyl, Butyl oder Halogen, vorzugsweise F, Cl, Br. Die Indices "0-4" bei T bedeuten ganze Zahlen Null, eins, zwei, drei oder vier.

Bevorzugte aromatische Dicarbonsäuren sind Isophthalsäure, Terephthalsäure oder Mischungen dieser beiden. Es können auch bevorzugt reaktive Derivate aromatischer Dicarbonsäuren wie Terephthalsäuredichlorid, Isophthalsäuredichlorid oder Mischungen dieser beiden eingesetzt werden.

Zur Synthese der Polyestercarbonate verwendbare Carbonatprecursoren sind Carbonylhalogenide, beispielsweise Phosgen oder Carbonylbromid und Carbonatester, beispielsweise Diphenylcarbonat.

Die Legierungen gemäß der Erfindung können außerdem Polyarylester enthalten, die abgeleitet sind aus wenigstens einem der oben beschriebenen Dihydroxyphenole und wenigstens einer der oben beschriebenen aromatischen Dicarbonsäuren oder deren reaktiven Derivate.

Diese Polyarylester können hergestellt werden durch eine der gut bekannten Polyester bildenden Reaktionen, beispielsweise durch Reaktion von Säurechloriden aromatischer Dicarbonsäuren mit Dihydroxyphenolen oder durch Reaktion von aromatischen Disäuren mit Diesterderivaten von Dihydroxyphenolen oder durch Reaktion von Dihydroxyphenolen mit aromatischen Dicarbonsäuren und Diarylcarbonaten. Solche Reaktionen sind beispielsweise in US 3,317,464; 3,395,119; 3,948,856; 3,780,148; 3,824,213 oder 3,133,898 beschrieben.

Diese Polyarylester sind bekanntermaßen thermisch weniger belastbar als die übrigen Komponenten der Legierungen gemäß der Erfindung. Daher sind niedrige Gewichtsanteile an solchen Polyarylestern bei denjenigen Legierungen zu bevorzugen, die Polyaryletherketone mit besonders hohen Schmelzpunkten, zum Beispiel dasjenige mit den nachfolgenden Wiederholungseinheiten, enthalten. 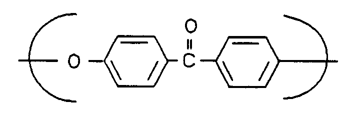
Da jedoch die oben beschriebenen Polyestercarbonate thermisch belastbarer als die übrigen Polyarylester sind, die im vorliegenden Text beschrieben sind, werden diese Polyestercarbonate als bevorzugte Polyarylester c) mit den ebengenannten Polyaryletherketonen mit besonders hohen Schmelzpunkten für die Herstellung einer Legierung gemäß der Erfindung eingesetzt.

Die verwendeten Polyarylester bzw. Polyestercarbonate besitzen Staudingerindices von 0,1 bis 2, vorzugsweise von 0,3 bis 1,5 und insbesondere von 0,3 bis 1 dl/g, gemessen bei 25°C in p-Chlorphenol, Methylenchlorid oder N-Methylpyrrolidon. Der Begriff Polyarylester, wie er hier verwendet wird, schließt Homopolymere, Copolymere, Terpolymere und Blockcopolymere ein.

Die homogene Mischbarkeit der Komponenten in den erfindungsgemäßen Legierungen wurde unter Verwendung mehrerer der oben beschriebenen Methoden nachgewiesen.

Beispielsweise zeigen die Legierungen gemäß der Erfindung eine einzige differentialkalorimetrisch nachweisbare Glastemperatur, sie weisen außerdem transparente Schmelzen auf.

Die Legierungen gemäß der Erfindung werden durch bekannte Legierungsmethoden hergestellt. Beispielsweise werden die Legierungspartner in Form von Pulver oder Granulat gemeinsam in einem Extruder zu Strängen extrudiert und die Stränge zu Granulat zerhackt und dieses in die gewünschte Form beispielsweise durch Pressen oder Spritzgießen gebracht.

Die Legierungen können Additive enthalten, beispielsweise Plastifizierer, thermische Stabilisatoren, UV-stabilisatoren, Schlagzähmodifizierer oder verstärkende Zusätze, wie Glas-, Kohle- oder Hochmodulfasern.

Die Legierungen können insbesondere vorteilhaft als Matrixmaterialien für Verbundwerkstoffe eingesetzt werden, da sie sowohl eine hohe Glastemperatur als auch eine gute Fließfähigkeit aufweisen. Insbesondere Composites aus den erfindungsgemäßen Legierungen mit Glasfasern oder Kohlefasern sind mechanisch stabil und gasblasenfrei herstellbar. Sie eignen sich ferner zur Herstellung von Formkörpern nach dem Spritzguß- oder Extrusionsverfahren, beispielsweise in Form von Fasern, Folien und Schläuchen.

### Beispiele

Folgende Polymere wurden synthetisiert und in den Beispielen eingesetzt:
Polyaryletherketon I mit einem Staudingerindex von 1,2 dl/g, gemessen in 96 %iger Schwefelsäure bei 25°C, das Wiederholeinheiten der folgenden Formel enthält: 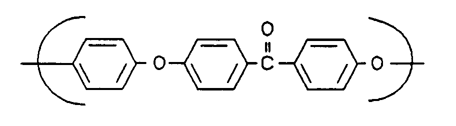
Das Polyaryletherketon II mit einem Staudingerindex von 1,0 dl/g, gemessen in 96 %iger Schwefelsäure bei 25°C, das Wiederholeinheiten der folgenden Formel enthält: 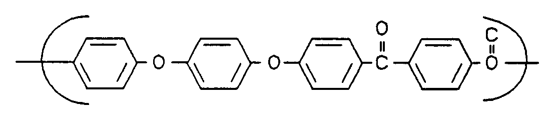
Das Polyaryletherketon III mit einem Staudingerindex von 1,0 dl/g, gemessen in 96 %iger Schwefelsäure bei 25°C, das Wiederholeinheiten der folgenden Formel enthält: 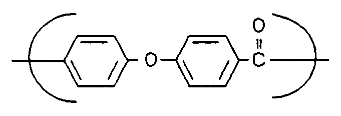
Polyimid I mit einem Staudingerindex von 0,5 dl/g, gemessen bei 25°C in Chloroform, das Wiederholeinheiten der folgenden Formel enthält: 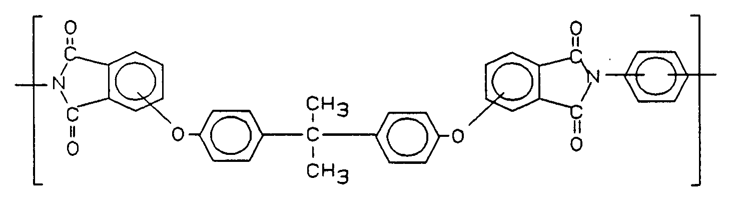
Polyarylester I mit einem Staudingerindex von 0,5 dl/g, gemessen in Methylenchlorid bei 25°C, der Wiederholeinheiten der folgenden Formel enthält: 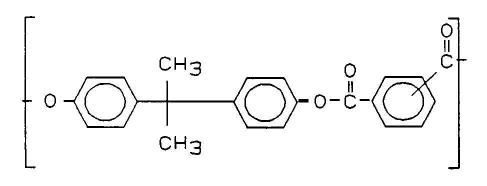
Polyarylester II mit einem Staudingerindex von 0,7 dl/g, gemessen in p-Chlorphenol bei 25°C, der Wiederholeinheiten der folgenden Formel enthält: 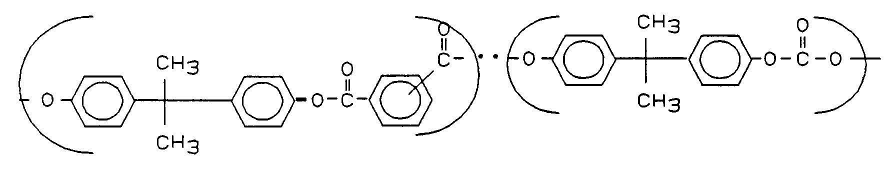
Die angeführten Polymere wurden zunächst getrocknet (140°C, 24 h, verminderter Druck) und anschließend in verschiedenen Gewichtsverhältnissen entweder in einem Meßkneter (Fa. HAAKE, Rheocord System 90/Rheomix 600, Karlsruhe, Bundesrepublik Deutschland) unter Inertgas geknetet oder in einem Meßextruder unter Schutzgas extrudiert (Fa. HAAKE, Rheocord System 90/Rheomex TW 100). Als Inert- bzw. Schutzgas wurde vorzugsweise Argon eingesetzt. Die erhaltenen Legierungen wurden getrocknet (140°C, 24 h, verminderter Druck) und anschließend entweder zu Formteilen wie Schulterstäben oder Schlagstäben (6 x 4 x 50 mm) spritzgegossen (Spritzgußmaschine Stübbe S55d der Fa. DEMAG, Kalldorf, Bundesrepublik Deutschland) oder auf ihre physikalischen Eigenschaften hin untersucht. Dazu wurden folgende Geräte verwendet:
Schmelzindex-Prüfgerät MPS-D der Fa. Goettfert, Buchen, Bundesrepublik Deutschland und ein Kapillarviskosimeter zur Messung von Fließfähigkeiten der Legierungen.

Torsionsautomat der Fa. Brabender, Offenbach, Bundesrepublik Deutschland und ein Differentialkalorimeter DSC 7 der Fa. Perkin Elmer, Überlingen, Bundesrepublik Deutschland zu Bestimmung von Glastemperaturen der Legierungen.

Schlagpendel-Prüfgerät der Fa. Zwick, Nürnberg, Bundesrepublik Deutschland zur Ermittlung von Schlagzähigkeiten nach Charpy (gekerbt).

In den Tabellen bedeutet "V" Vergleich.

### Beispiel 1:

Im Meßkneter wurden das Polyetherketon I, das Polyimid I und der Polyarylester I in verschiedenen Gewichtsverhältnissen bei einer Temperatur von 360°C bei einer Drehzahl von 100 u/min für 30 Minuten gemeinsam geknetet. Die Tab. 1 zeigt, daß die überwiegende Mehrzahl der Legierungen aus homogen mischbaren Komponenten bestehen, da sie sowohl eine einzige von der Zusammensetzung abhängige Glastemperatur als auch transparente Schmelzen aufweisen.

**Tab. 1**

| Mischbarkeit | | | | | |
|---|---|---|---|---|---|
| | Polyaryletherketon I | Polyimid I (Gew.-%) | Polyarylester I | Anzahl der Glastemperaturen °C | Schmelzetransparenz |
| V | 100 % | 0 | 0 % | eine 142 | ja |
| V | 0 % | 100 | 0 % | eine 217 | ja |
| V | 0 % | 0 | 100 % | eine 190 | ja |
| V | 80 % | 20 | 0 % | eine 163 | ja |
| V | 50 % | 50 | 0 % | eine 180 | ja |
| V | 20 % | 80 | 0 % | eine 201 | ja |
| | 80 % | 10 | 10 % | eine 153 | ja |
| | 60 % | 20 | 20 % | eine 160 | ja |
| | 50 % | 25 | 25 % | eine 180 | ja |
| V | 33,3 % | 33,3 | 33,3 % | eine 180 | ja |
| V | 20 % | 60 | 20 % | eine 185 | ja |
| V | 20 % | 20 | 60 % | zwei | nein |
| V | 80 % | 0 | 20 % | eine 145 | ja |
| | 55 % | 10 | 35 % | eine 165 | ja |
| | 45 % | 10 | 45 % | eine 170 | ja |
| V | 40 % | 20 | 40 % | eine 175 | ja |
| V | 0 % | 50 | 50 % | eine 195 | ja |
| V | 0 % | 75 | 25 % | eine 205 | ja |

Dieses Beispiel zeigt, daß die Komponenten der Legierungen gemäß der Erfindung in einem weiten Konzentrationsbereich homogen mischbar sind und höhere Glastemperaturen aufweisen als das Polyaryletherketon I allein.

### Beispiel 2:

Mittels eines Zweischneckenextruders (alle vier Zonen 360°C) wurden die in Beispiel 1 genannten Polymere nach intensiver Trocknung (140°C, 24 h, verminderter Druck) in verschiedenen Gewichtsverhältnissen gemeinsam extrudiert und granuliert. Das Granulat wurde anschließend bei 140°C für 24 Stunden unter vermindertem Druck getrocknet und für Messungen der Fließfähigkeit der Legierungen verwendet. In Tab. 2 sind die erhaltenen MFI-Werte (Schmelz-Index nach DIN 53735 - MFI-B, 360°C) und die mittels eines Kapillarviskosimeters gemessenen Schmelzeviskositäten (2 Scherraten) angegeben.

**Tab. 2**

| Fließfähigkeit | | | | | | |
|---|---|---|---|---|---|---|
| | Polyarylether keton I | Polyimid I (Gew.-%) | Polyarylester I | MFI (360°C) | Viskosität bei 360°C in Pas | |
| | | | | | 300s⁻¹ | 120s⁻¹ |
| V | 100 % | 0 | 0 % | 5 | 900 | 1 300 |
| V | 0 % | 100 | 0 % | 30 | 260 | 270 |
| V | 80 % | 20 | 0 % | 7 | 900 | 1 300 |
| V | 0 % | 0 | 100 % | 190 | 43 | 49 |
| V | 50 % | 50 | 0 % | 11 | 830 | 1 300 |
| V | 20 % | 80 | 0 % | 15 | 830 | 1 280 |
| | 80 % | 10 | 10 % | 20 | 500 | 600 |
| | 60 % | 20 | 20 % | 29 | 300 | 360 |
| V | 33,3 % | 33,3 | 33,3 % | 73 | | |
| V | 20 % | 60 % | 20 % | 60 | 230 | 270 |

Dieses Beispiel zeigt, daß die Schmelzeviskositäten der Legierungen gemäß der Erfindung deutlich niedriger als die von Polyaryletherketon I allein sind, was durch Zumischen von Polyimid I allein zu Polyetherketon I nur in geringem Maße erreicht werden kann.

### Beispiel 3:

Es wurden bei 360°C die in Beispiel 2 beschriebenen Granulate zu Schlagstäben und Schulterstäben spritzgegossen und an diesen die Schlagzähigkeiten (nach Charpy, gekerbt) und die Wasseraufnahme (23°C, 85 % rel. Feuchte, 24 h) der Legierungen gemessen (Tab. 3).

**Tab. 3**

| Schlagzähigkeiten und Wasseraufnahme | | | | | |
|---|---|---|---|---|---|
| | Polyaryletherketon I | Polyimid I (Gew.-%) | Polyarylester I | Wasseraufnahme in Gew. % | Schlagzähigkeit (mJ) |
| V | 100 % | 0 | 0 % | 0,2 | 110 |
| V | 0 % | 100 | 0 % | 0,51 | 80 |
| V | 80 % | 20 | 0 % | 0,24 | 120 |
| V | 50 % | 50 | 0 % | 0,38 | 115 |
| V | 20 % | 80 | 0 % | 0,43 | 80 |
| | 80 % | 10 | 10 % | 0,23 | 105 |
| | 60 % | 20 | 20 % | 0,27 | 100 |
| V | 33,3 % | 33,3 | 33,3 % | 0,39 | 95 |
| V | 20 % | 60 | 20 % | 0,46 | 78 |

Dieses Beispiel zeigt, daß eine geringe Wasseraufnahme und gute Schlagzähigkeitswerte nur durch die Legierungen gemäß der Erfindung erhalten werden, die innerhalb der beanspruchten Grenzen der Einzelkomponenten liegen und vergleichbar sind mit denen von Legierungen von Polyaryletherketonen mit Polyimiden allein.

### Beispiel 4:

Es wurden im Kneter bei 380°C für 30 Minuten bei 100 u/min miteinander geknetet: Polyaryletherketon II, Polyimid I und Polyarylester II in verschiedenen Zusammensetzungen. Die Tab. 4 zeigt, daß die überwiegende Zahl der Komponenten der Legierungen homogen mischbar sind, da diese transparente Schmelzen und eine einzige von der Zusammensetzung abhängige Glastemperatur aufweisen.

**Tab. 4**

| Mischbarkeit | | | | | |
|---|---|---|---|---|---|
| | Polyaryletherketon II | Polyimid (Gew.-%) | Polyarylester II | Anzahl der Glastemperaturen °C | Schmelzetransparenz |
| V | 100 % | 0 | 0 % | eine 165 | ja |
| V | 75 % | 25 | 0 % | eine 170 | ja |
| V | 50 % | 50 | 0 % | eine 205 | ja |
| V | 20 % | 75 | 0 % | eine 217 | ja |
| | 80 % | 10 | 10 % | eine 170 | ja |
| | 60 % | 20 | 20 % | eine 175 | ja |
| V | 33,3 % | 33,3 | 33,3 % | eine 185 | ja |
| V | 0 % | 50 | 50 % | eine 195 | ja |

### Beispiel 5:

Es wurden 0,3 mm dicke Folien bei 380°C unter vermindertem Druck aus den in Beispiel 2 beschriebenen Legierungen (Granulat) gepreßt (100 bar). Zwischen je zwei dieser Folien-Platten wurden handelsübliche Gewebe aus Kohlefasern gelegt und diese Sandwiches unter vermindertem Druck bei 380°C zu Composites verpreßt. Es resultierten gasblasenfreie Composites.

### Beispiel 6:

Es wurden Polyaryletherketon I, Polyaryletherketon II, Polyimid I und Polyarylester II in den in Tab. 5 angegebenen Gewichtsverhältnissen im Meßkneter bei 380°C und 100 U/min für 30 Minuten gemeinsam geknetet. Die untersuchten Legierungen zeigen eine einzige von der Zusammensetzung abhängige Glastemperatur und transparente Schmelzen. Sie wurden daher als homogen gemischt beurteilt.

**Tab. 5**

| Mischbarkeit | | | | | | |
|---|---|---|---|---|---|---|
| | Polyaryletherketon II | Polyaryletherketon I (Gew.-%) | Polyimid I | Polyarylester II | Anzahl der Glastemperaturen °C | Schmelzetransparenz |
| | 33,3 % | 33,3 | 6,7 % | 16,7 % | eine 175 | ja |
| V | 33,3 % | 33,3 | 33,3 % | 0 % | eine 180 | ja |
| | 30 % | 30 % | 30 % | 10 % | eine 180 | ja |

### Beispiel 7:

Es wurden 25 g des Polyaryletherketones III, 15 g des Polyimides I und 5 g des Polyarylesters II bei 390°C im Kneter für 20 Minuten bei 100 U/min gemeinsam geknetet. Es lag eine transparente Schmelze vor, und die resultierende Legierung wies eine einzige Glastemperatur von 165°C auf.

## Patentansprüche

1. Legierung aus homogenen gemischten Polymeren mit einer Glastemperatur, enthaltend
a) 98 bis 45 Gew.-% mindestens eines Polyaryletherketons mit einem Staudingerindex von 0,2 bis 5 dl/g,
b) 1 bis 50 Gew.-% eines Polyimids mit einem Staudingerindex von 0,1 bis 3 dl/g,
c) 1 bis 50 Gew.-% mindestens eines Polyarylesters mit einem Staudingerindex von 0,1 bis 2 dl/g, jeweils bezogen auf die Gesamtlegierung.

2. Legierung nach Anspruch 1, dadurch gekennzeichnet, daß die Komponenten in den Mengenverhältnissen vorliegen:
a) Polyaryletherketone: 95 bis 60 und insbesondere 95 bis 75 Gew.-%,
b) Polyimide: 2 bis 35 und insbesondere 2 bis 20 Gew.-% und
c) Polyarylester: 2 bis 35 und insbesondere 2 bis 20 Gew.-%, jeweils bezogen auf die Gesamtlegierung.

3. Legierung nach Anspruch 1 oder 2, dadurch gekennzeichnet, daß die Komponenten Staudingerindices aufweisen:
a) Polyaryletherketone von 0,5 bis 2,5 und insbesondere von 0,7 bis 2,0 dl/g,
b) Polyimide von 0,3 bis 1,5 und insbesondere von 0,3 bis 1,0 dl/g und
c) Polyarylester von 0,3 bis 1,5 und insbesondere von 0,3 bis 1 dl/g.

4. Legierung nach einem oder mehreren der Ansprüche 1 bis 3, dadurch gekennzeichnet, daß das Polyaryletherketon Wiederholeinheiten einer oder mehrerer der folgenden Formeln enthält: 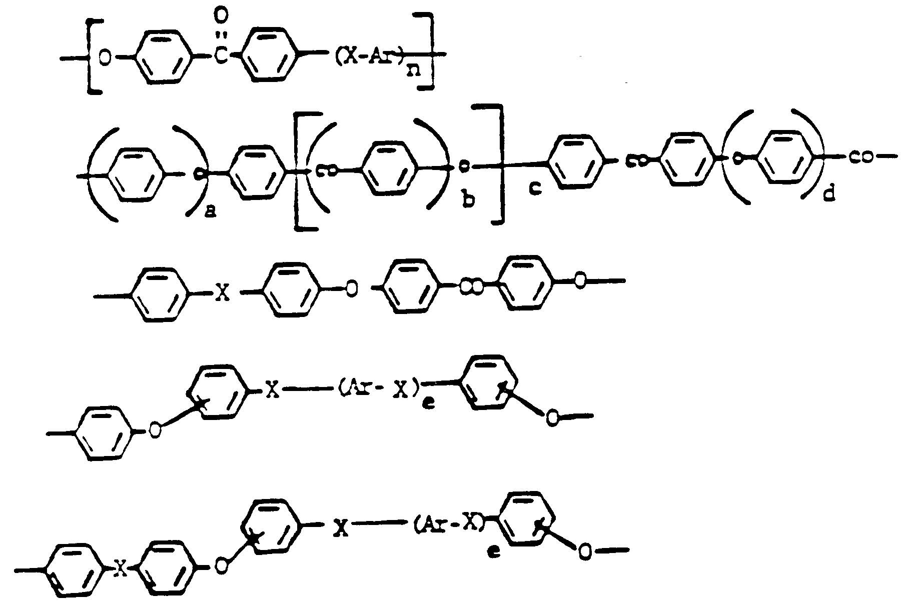 wobei Ar ein divalentes aromatisches Radikal darstellt, ausgewählt aus Phenylen, Biphenylen oder Naphthylen, und X für O, CO oder eine direkte Bindung steht, n Null oder als ganze Zahl 1, 2 oder 3 ist, b, c, d und e sind Null oder 1, a ist als ganze Zahl 1, 2, 3 oder 4 und d ist bevorzugt Null, falls b gleich 1 ist.

5. Legierung nach Anspruch 4, dadurch gekennzeichnet, daß das Polyaryletherketon eine Struktur mit folgenden Wiederholeinheiten aufweist:

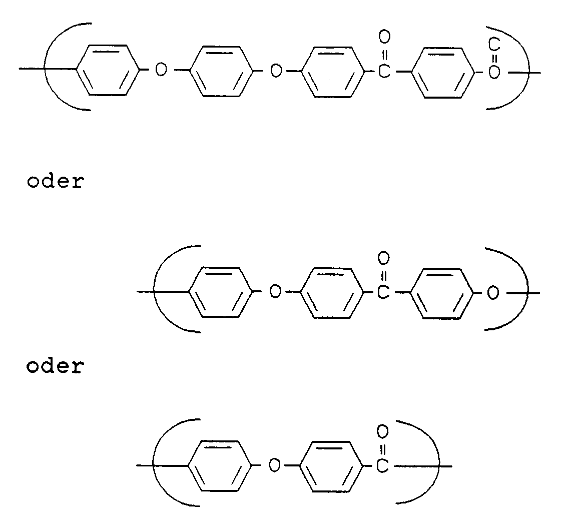

6. Legierung nach einem oder mehreren der Ansprüche 1 bis 5, dadurch gekennzeichnet, daß das Polyimid folgende Wiederholeinheiten aufweist 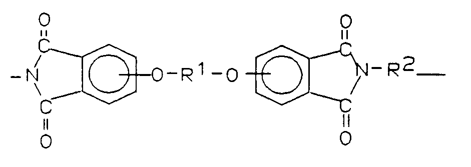 wobei R¹
(α) ein substituierter oder unsubstituierter aromatischer Rest der folgenden Formeln 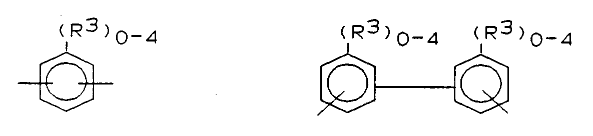 oder
(β) ein zweiwertiger Rest der allgemeinen Formel 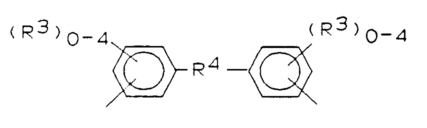 ist, wobei R³ für C₁-C₆-Alkyl oder Halogen steht, und R⁴ steht für -O-, -S-, -CO-, -SO₂-, -SO-, Alkylen und Alkyliden mit jeweils 1 bis 6 Kohlenstoffatomen oder Cycloalkylen und Cycloalkyliden mit jeweils 4 bis 8 Kohlenstoffatomen;
R² ist ein aromatischer Kohlenwasserstoffrest aus 6 bis 20, vorzugsweise 6 bis 12 Kohlenstoffatomen, oder Halogen, oder ein halogen- oder alkylsubstituiertes Derivat davon, wobei die Alkylgruppe 1 bis 6 Kohlenstoffatome enthält, ein Alkylen- oder Cycloalkylenrest mit 2 bis 20 Kohlenstoffatomen oder ein zweiwertiger Rest der Formel 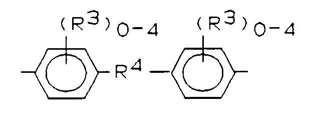 wobei R³ und R⁴ die obige Bedeutung haben und R⁴ auch eine direkte Bindung sein kann.

7. Legierung nach einem oder mehreren der Ansprüche 1 bis 5, dadurch gekennzeichnet, daß das Polyimid Wiederholeinheiten der folgenden Formel enthält: 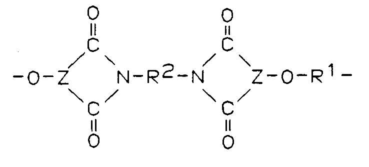 in der R¹ und R² wie oben definiert ist und wobei
-O-Z〈 für 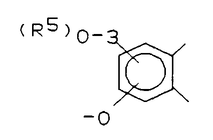 steht, wobei R⁵ unabhängig voneinander Wasserstoff, Alkyl oder Alkoxy mit 1 bis 6 C-Atomen im Alkylrest bedeutet, oder 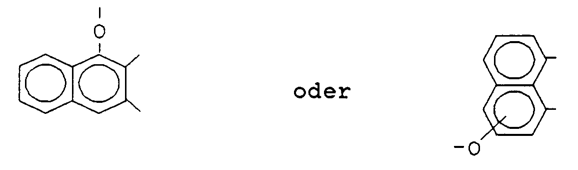 bedeuten, wobei der Sauerstoff mit einem der Ringe verknüpft ist und in ortho- oder para-Stellung zu einer der Bindungen der Imidcarbonylgruppe steht.

8. Legierung nach einem oder mehreren der Ansprüche 1 bis 6, dadurch gekennzeichnet, daß das Polyimid Wiederholeinheiten der folgenden Formel aufweist:

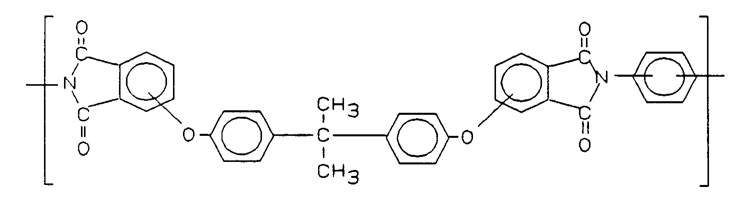

9. Legierung nach einem oder mehreren der Ansprüche 1 bis 8, dadurch gekennzeichnet, daß der Polyarylester c) ein Polyestercarbonat ist auf Basis von einem Dihydroxyphenol, einem Carbonat-Precursor und einer aromatischen Dicarbonsäure oder eines reaktiven Derivates daraus oder aus wenigstens einem Dihydroxyphenol und wenigstens einer aromatischen Dicarbonsäure abgeleitet ist.

10. Legierung nach Anspruch 9, dadurch gekennzeichnet, daß das Dihydroxyphenol folgende Formel aufweist: 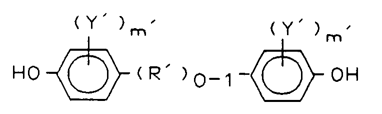 in der Y′ Alkyl mit 1 bis 4 Kohlenstoffatomen, Cycloalkyl mit 6 bis 12 Kohlenstoffatomen oder Halogen bedeuten, m′ ist unabhängig voneinander Null, 1, 2, 3 oder 4 und R′ ist Alkylen oder Alkyliden mit 1 bis 8 Kohlenstoffatomen oder ein Arylenrest mit 6 bis 20 Kohlenstoffatomen, vorzugsweise ist m′ Null und R′ Alkyliden mit 3 Kohlenstoffatomen.

11. Legierung nach Anspruch 10, dadurch gekennzeichnet, daß das Dihydroxyphenol Bisphenol A ist.

12. Legierung nach Anspruch 9, dadurch gekennzeichnet, daß die aromatische Dicarbonsäure die folgende Formel aufweist:
HOOC - R˝ - COOH
wobei R˝ ausgewählt ist aus den Gruppen 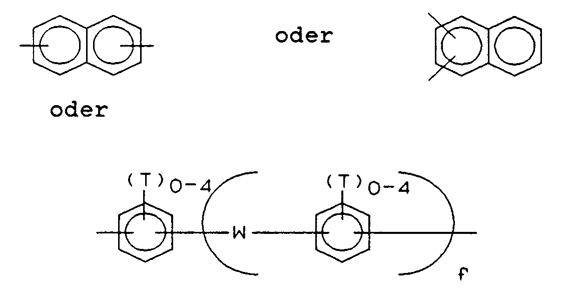 wobei f Null oder 1 ist und W für O, SO₂, CO, C(CH₃)₂, CH₂, S oder 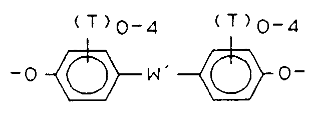 steht, wobei W′ die oben für W angegebene Bedeutung hat, T ist in den Formeln Alkyl mit 1 bis 6 C-Atomen, vorzugsweise Methyl, Propyl und Butyl oder Halogen, vorzugsweise F, Cl oder Br.

13. Legierung nach Anspruch 12, dadurch gekennzeichnet, daß die aromatische Dicarbonsäure ausgewählt ist aus Isophthalsäure, Terephthalsäure und Mischungen davon; und wobei die reaktiven Derivate der Säuren ausgewählt sind aus Terephthalsäuredichlorid, Isophthalsäuredichlorid und Mischungen davon.

14. Legierung nach Anspruch 9, dadurch gekennzeichnet, daß der Carbonatprecursor Phosgen ist.

15. Legierung nach einem oder mehreren der Ansprüche 9 bis 14, dadurch gekennzeichnet, daß das Polyestercarbonat ein Copolymeres aus Bisphenol A, Terephthalsäuredichlorid, Isophthalsäuredichlorid oder Mischungen dieser beiden und Phosgen ist.

16. Legierung nach einem oder mehreren der Ansprüche 9 bis 13, dadurch gekennzeichnet, daß das Dihydroxyphenol Bisphenol A ist, und die aromatischen Dicarbonsäuren Terephthalsäure oder Isophthalsäure oder Mischungen dieser beiden sind.

17. Legierung nach Anspruch 1, dadurch gekennzeichnet, daß das Polyaryletherketon Wiederholeinheiten der folgenden Formel 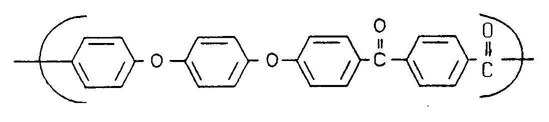 und das Polyimid Wiederholeinheiten der folgenden Formel 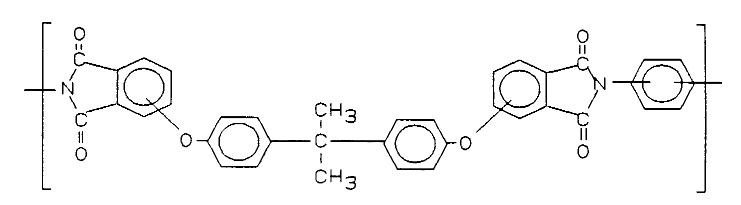 und der Polyarylester Wiederholeinheiten der folgenden Formel enthält

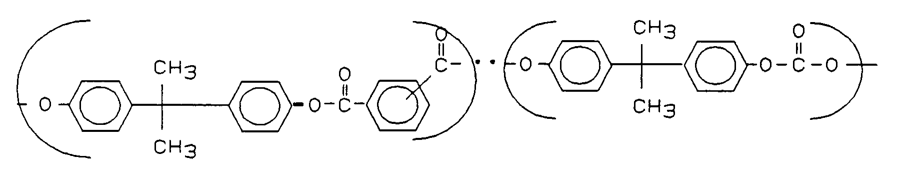

18. Legierung nach Anspruch 1, dadurch gekennzeichnet, daß das Polyaryletherketon Wiederholeinheiten der folgenden Formel 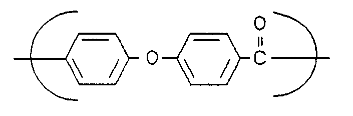 und das Polyimid Wiederholeinheiten der folgenden Formel 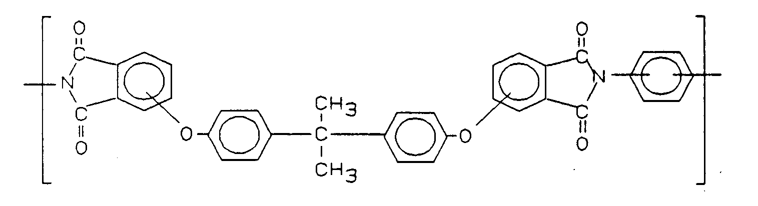 und der Polyarylester Wiederholeinheiten der folgenden Formel enthält

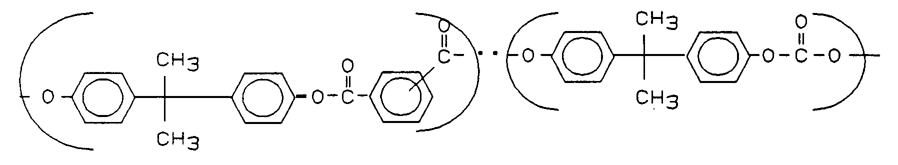

19. Legierung nach Anspruch 1, dadurch gekennzeichnet, daß das Polyaryletherketon Wiederholeinheiten der folgenden Formel 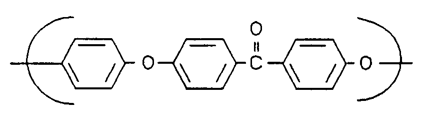 und der Polyarylester Wiederholeinheiten der folgenden Formel 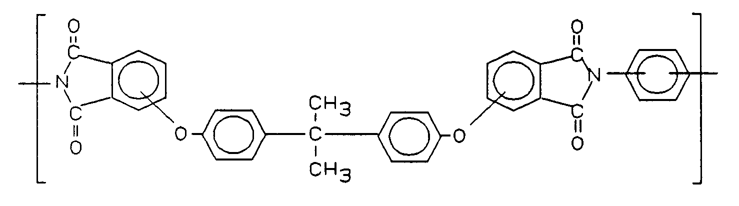 und der Polyarylester Wiederholeinheiten der folgenden Formel enthält

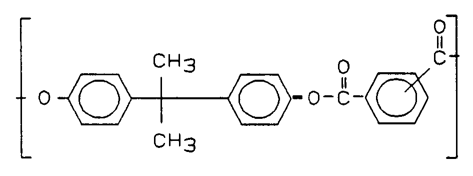

20. Verwendung einer Legierung nach einem oder mehreren der Ansprüche 1 bis 19 zur Herstellung von Formkörpern oder als Matrixmaterial für Composites.

21. Verwendung nach Anspruch 20, dadurch gekennzeichnet, daß Kohlefasern oder Glasfasern für die Composites eingesetzt werden.

22. Verwendung nach Anspruch 20 zur Herstellung von Spritzgußprodukten oder Extrusionsprodukten in Form von Fasern, Folien oder Schläuchen.

## Claims

1. An alloy of homogeneously mixed polymers, having one glass transition temperature and containing
(a) 98 to 45 % by weight of at least one polyaryl ether ketone having a Standinger index of from 0.2 to 5 dl/g,
(b) 1 to 50 % by weight of a polyimide having a Standinger index of from 0.1 to 3 dl/g, and
(c) 1 to 50 % by weight of at least one polyaryl ester having a Standinger index of from 0.1 to 2 dl/g, based in each case on the total alloy.

2. An alloy as claimed in claim 1, wherein the components are present in the following proportions:
a) polyaryl ether ketones: 95 to 60 and in particular 95 to 75 % by weight,
b) polyimides: 2 to 35 and in particular 2 to 20 % by weight, and
c) polyaryl esters: 2 to 35 and in particular 2 to 20 % by weight, based in each case on the total alloy.

3. An alloy as claimed in claim 1 or 2, wherein the components have the following Standinger indices:
a) polyaryl ether ketones from 0.5 to 2.5 and in particular from 0.7 to 2.0 dl/g,
b) polyimides from 0.3 to 1.5 and in particular from 0.3 to 1.0 dl/g, and
c) polyaryl esters from 0.3 to 1.5 and in particular from 0.3 to 1 dl/g.

4. An alloy as claimed in one or more of claims 1 to 3, wherein the polyaryl ether ketone contains repeating units of one or more of the following formulae: 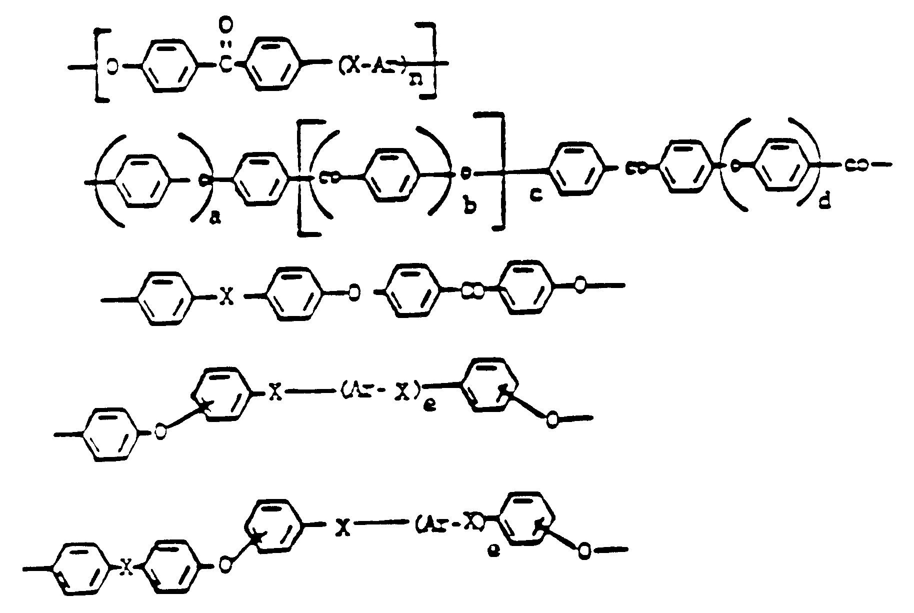 in which Ar is a divalent aromatic radical selected from phenylene, biphenylene or naphthylene, and X is O, CO or a direct bond, n is zero or is, as an integer, 1, 2 or 3; b, c, d and e are zero or 1, a is, as an integer, 1, 2, 3 or 4 and d is preferably zero, if b is equal to 1.

5. An alloy as claimed in claim 4, wherein the polyaryl ether ketone has a structure containing the following repeating units:

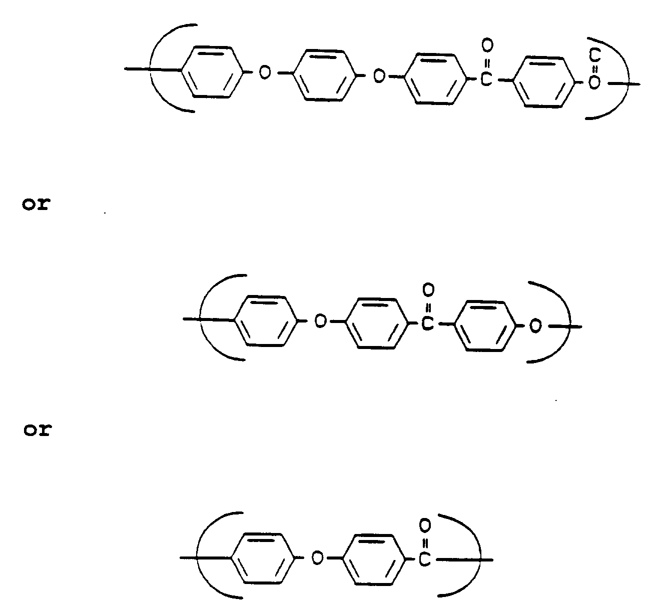

6. An alloy as claimed in one or more of claims 1 to 5, wherein the polyimide has the following repeating units: 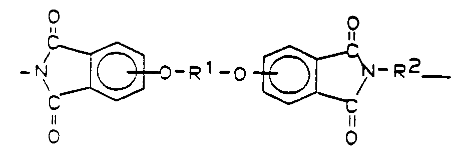 in which R¹ is
(α) a substituted or unsubstituted aromatic radical of the following formulae 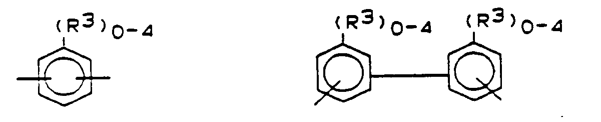 or
(β) a divalent radical of the formula 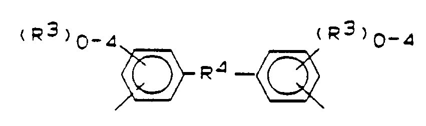 in which R³ is C₁-C₆-alkyl or halogen and R⁴ is -O-, -S-, -CO-, -SO₂-, -SO-, alkylene and alkylidene each having 1 to 6 carbon atoms or cycloalkylene and cycloalkylidene each having 4 to 8 carbon atoms;
R² is an aromatic hydrocarbon radical having 6 to 20, preferably 6 to 12, carbon atoms or halogen or a halogenor alkyl-substituted derivative thereof, the alkyl group containing 1 to 6 carbon atoms, an alkylene or cycloalkylene radical having 2 to 20 carbon atoms or a divalent radical of the formula 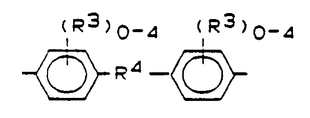 in which R³ and R⁴ are as defined above and R⁴ may also be a direct bond.

7. An alloy as claimed in one or more of claims 1 to 5, wherein the polyimide contains repeating units of the following formula: 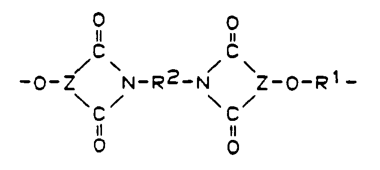 in which R¹ and R² are as defined above and
-O-Z〈 is 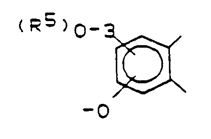 in which each R⁵, independently of the other(s), is hydrogen, alkyl or alkoxy having 1 to 6 carbon atoms in the alkyl radical, or is 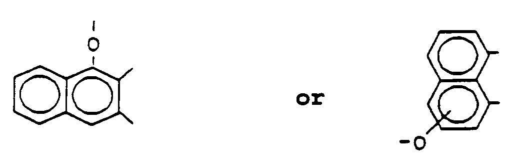 in which the oxygen is linked with one of the rings and is in the ortho- or para-position relative to one of the bonds of the imide carbonyl group.

8. An alloy as claimed in one or more of claims 1 to 6, wherein the polyimide has repeating units of the following formula:

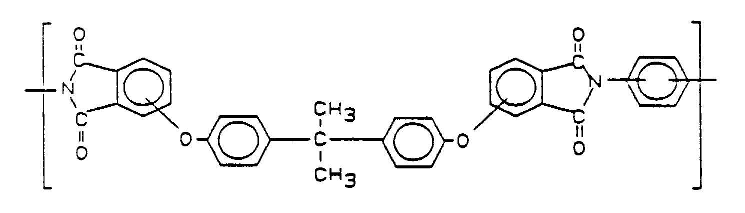

9. An alloy as claimed in one or more of claims 1 to 8, wherein the polyaryl ester c) is a polyester carbonate based on a dihydroxyphenol, a carbonate precursor and an aromatic dicarboxylic acid or a reactive derivative thereof, or is derived from at least one dihydroxyphenol and at least one aromatic dicarboxylic acid.

10. An alloy as claimed in claim 9, wherein the dihydroxyphenol has the following formula: 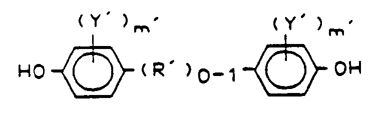 in which Y' is alkyl having 1 to 4 carbon atoms, cycloalkyl having 6 to 12 carbon atoms or halogen, m' independently of one another is zero, 1, 2, 3 or 4 and R' is alkylene or alkylidene having 1 to 8 carbon atoms or an arylene radical having 6 to 20 carbon atoms, m' preferably being zero and R' preferably being alkylidene having 3 carbon atoms.

11. An alloy as claimed in claim 10, wherein the dihydroxyphenol is bisphenol A.

12. An alloy as claimed in claim 9, wherein the aromatic dicarboxylic acid has the following formula:
HOOC-R''-COOH
in which R'' is selected from the groups 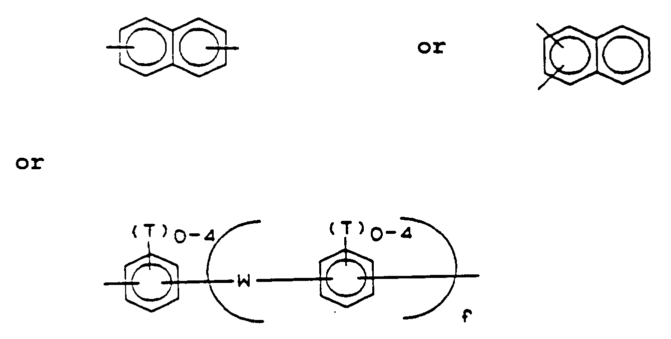 in which f is zero or 1 and W is O, SO₂, CO, C(CH₃)₂, CH₂, S or 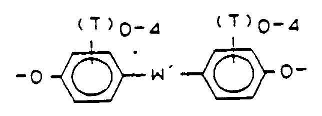 in which W' has the meaning given above for W, T in the formulae is alkyl having 1 to 6 carbon atoms, preferably methyl, propyl or butyl, or halogen, preferably F, Cl or Br.

13. An alloy as claimed in claim 12, wherein the aromatic dicarboxylic acid is selected from isophthalic acid, terephthalic acid and mixtures thereof; and in which the reactive derivatives of the acids are selected from terephthaloyl dichloride, isophthaloyl dichloride and mixtures thereof.

14. An alloy as claimed in claim 9, wherein the carbonate precursor is phosgene.

15. An alloy as claimed in one or more of claims 9 to 14, wherein the polyester carbonate is a copolymer of bisphenol A, terephthaloyl dichloride, isophthaloyl dichloride or a mixture of these two and phosgene.

16. An alloy as claimed in one or more of claims 9 to 13, wherein the dihydroxyphenol is bisphenol A, and the aromatic dicarboxylic acid is terephthalic acid or isophthalic acid or a mixture of these two.

17. An alloy as claimed in claim 1, wherein the polyaryl ether ketone contains repeating units of the following formula 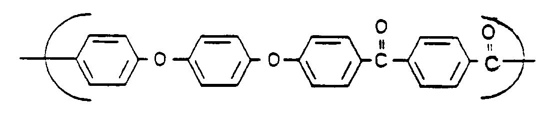 and the polyimide contains repeating units of the following formula 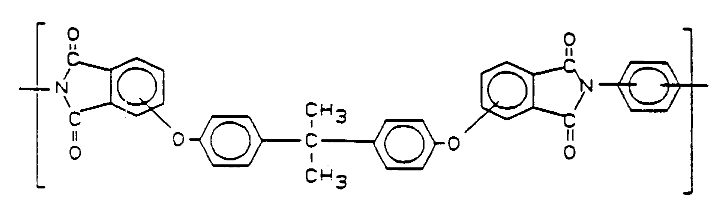 and the polyaryl ester contains repeating units of the following formula

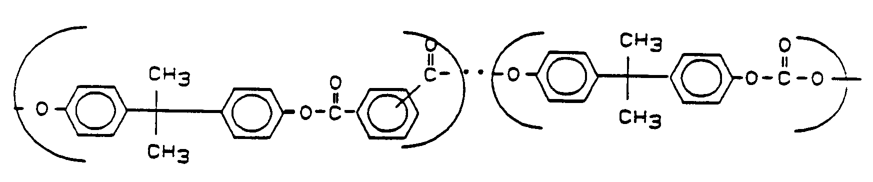

18. An alloy as claimed in claim 1, wherein the polyaryl ether ketone contains repeating units of the following formula 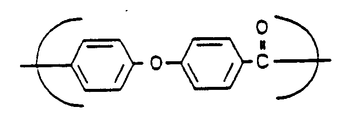 and the polyimide contains repeating units of the following formula 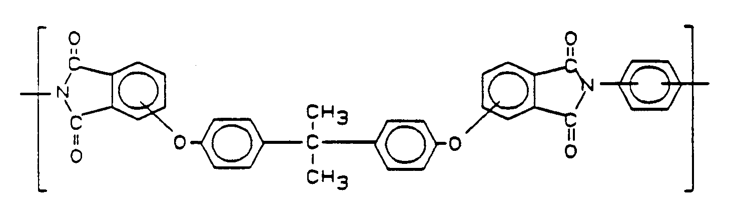 and the polyaryl ester contains repeating units of the following formula

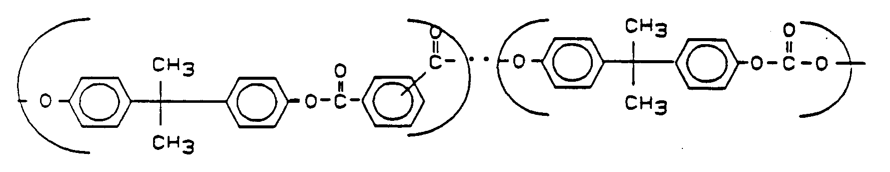

19. An alloy as claimed in claim 1, wherein the polyaryl ether ketone contains repeating units of the following formula 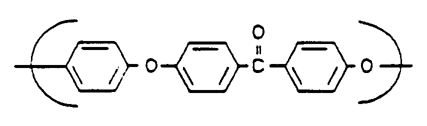 and the polyaryl ester contains repeating units of the following formula 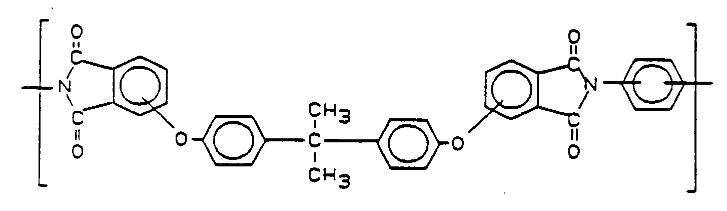 and the polyaryl ester contains repeating units of the following formula

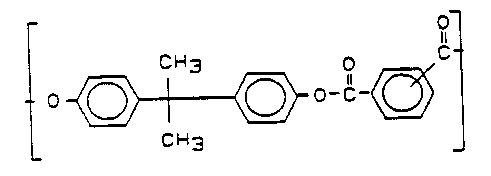

20. The use of an alloy as claimed in one or more of claims 1 to 19 for the preparation of molded articles or as the matrix material for composites.

21. The use as claimed in claim 20, wherein carbon fibers or glass fibers are used for the composites.

22. The use as claimed in claim 20 for the preparation of injection molded products or extruded products in the form of fibers, films or tubes.

## Revendications

1. Alliage de polymères en mélange homogène ayant une température vitreuse, contenant
a) 98 à 45% en poids d'au moins une polyaryléthercétone ayant un indice limite de viscosité compris entre 0,2 et 5 dl/g
b) 1 à 50% en poids d'un polyimide ayant un indice limite de viscosité compris entre 0,1 et 3 dl/g
c) 1 à 50% en poids d'au moins un polyarylester ayant un indice limite de viscosité compris entre 0,1 et 2 dl/g, à chaque fois rapporté à l'alliage total.

2. Alliage selon la revendication 1 caractérisé en ce que les composants se présentent selon les proportions :
a) polyaryléthercétone : 95 à 60% en poids et en particulier 95 à 75%,
b) polyimide : 2 à 35% en poids et en particulier 2 à 20% et
c) polyarylester : 2 à 35% en poids et en particulier 2 à 20%, à chaque fois rapporté à l'alliage total.

3. Alliage selon la revendication 1 ou 2 caractérisé en ce que les composants présentent un indice limite de viscosité :
a) polyaryléthercétone de 0,5 à 2,5 dl/g et en particulier de 0,7 à 2,0 dl/g,
b) polyimide de 0,3 à 1,5 dl/g et en particulier de 0,3 à 1,0 dl/g et
c) polyarylester de 0,3 à 1,5 dl/g et en particulier de 0,3 à 1 dl/g.

4. Alliage selon une ou plusieurs des revendications 1 à 3 caractérisé en ce que la polyaryléthercétone contient des motifs récurrents de l'une ou plusieurs des formules suivantes : 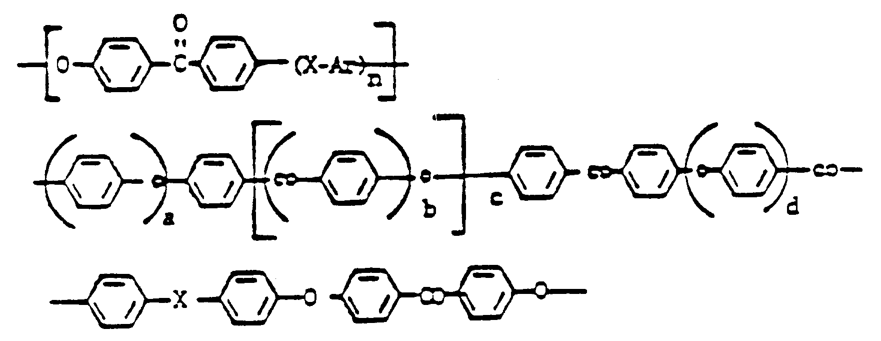 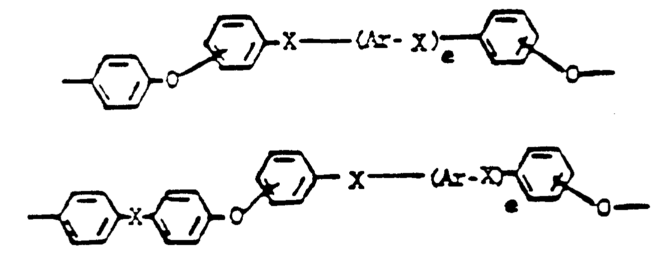 dans lesquelles Ar représente un radical aromatique divalent, selectionné parmi phénylène, biphénylène ou naphtalénylène, et X représente un O, un CO ou une liaison directe, n vaut zéro ou est un des nombres entier 1, 2 ou 3, b, c,d, et e valent zéro ou 1, a est un des nombres entiers 1, 2, 3 ou 4, et d vaut de préférence zéro, dans le cas où b est égal à 1.

5. Alliage selon la revendication 4 caractérisé en ce que la polyaryléthercétone présente une structure ayant les motifs récurrents suivants :

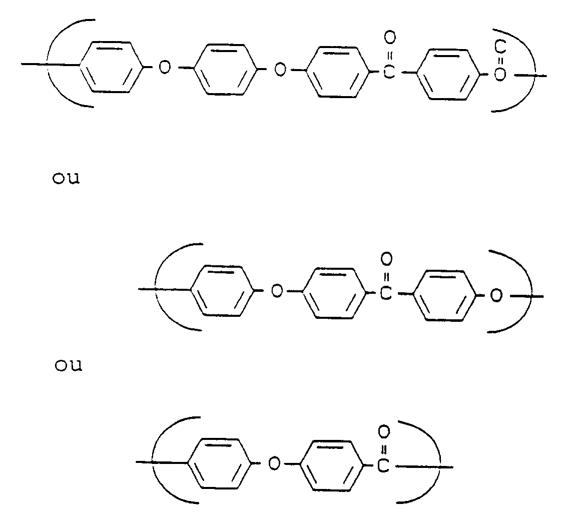

6. Alliage selon l'une ou plusieurs des revendications 1 à 5 caractérisé en ce que le polyimide présente le motif récurrent suivant : 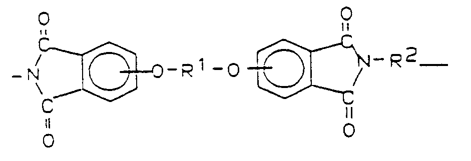 dans lequel R¹ est
(α) un reste aromatique substitué ou non de formules suivantes 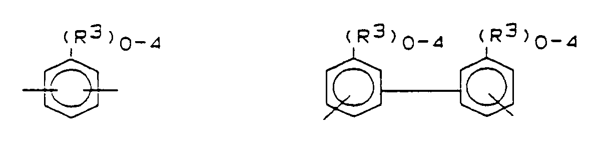 ou
(β) un reste divalent de formule générale 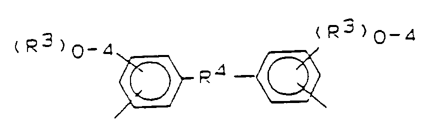 dans lesquelles R³ représente un alkyle en C₁-C₆ ou un halogène, et R⁴ représente un -O-, un -S-, un -CO-, un -SO₂-, un -SO-, un alkylène ou un alkylidène ayant à chaque fois 1 à 6 atomes de carbone ou un cycloalkylène et un cycloalkylidène ayant à chaque fois 4 à 8 atomes de carbone ;
R² est un reste hydrocarboné aromatique ayant 6 à 20 atomes de carbone, de préférence 6 à 12, ou un de leurs dérivés alkyle ou halogénosubstitués, dans lequel les groupes alkyles contiennent de 1 à 6 atomes de carbone, un reste alkylène ou cycloalkylène ayant de 2 à 20 atome de carbone ou un reste divalent de formule 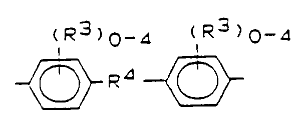 dans laquelle R³ et R⁴ ont la signification précédente et R⁴ peut aussi être une liaison directe.

7. Alliage selon l'une ou plusieurs des revendications 1 à 5 caractérisé en ce que le polyimide contient un motif récurrent de formule suivante : 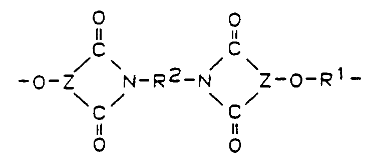 dans laquelle R¹ et R² sont définis comme ci-dessus et où
-O-Z〈 représente 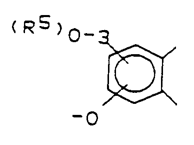 dans lequel les R⁵, indépendamment les uns des autres, signifient les hydrogène, alkyle ou alkoxy ayant 1 à 6 atomes de carbone dans le reste alkyle ou 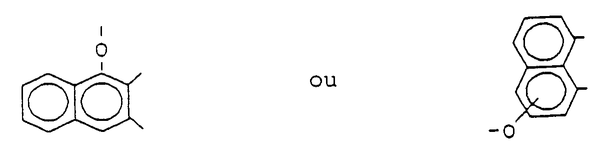 dans lesquels l'oxygène est lié à l'un des cycles et se trouve en position ortho ou para par rapport à l'une des liaison du groupe dicarboximide.

8. Alliage selon l'une ou plusieurs de revendications 1 à 6 caractérisé en ce que le polymide présente le motif récurrent de formule suivante :

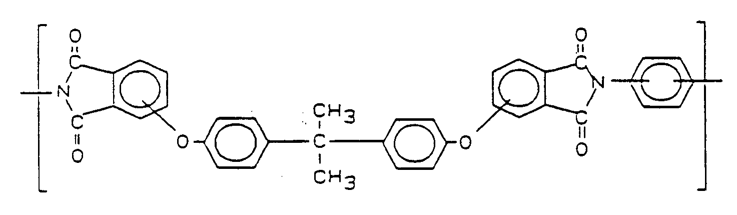

9. Alliage selon l'une ou plusieurs des revendications 1 à 8 caractérisé en ce que le polyarylester c) est un polyestercabonate à base d'un dihydroxyphénol, d'un précurseur de carbonate et d'un diacide carboxylique aromatique ou d'un de leurs dérivés réactifs ou est dérivé d'au moins un dihydroxyphénol et d'au moins un diacide carboxylique aromatique.

10. Alliage selon la revendication 9 caractérisé en ce que le dihydroxyphénol présente la formule suivante : 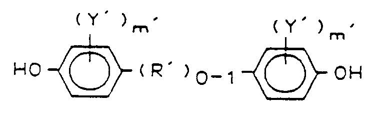 dans laquelle Y' signifie les alkyle ayant 1 à 4 atomes de carbone, cycloalkyle ayant 6 à 12 atomes de carbone, ou halogène, les m' valent, indépendamment l'un de l'autre, zéro, 1, 2,3 ou 4 et R' est un alkylène ou l'un alkylidène ayant de 1 à 8 atomes de carbone ou un reste arylène ayant de 6 à 20 atomes de carbone, de préférence m' vaut zéro et R' est un alkylidène ayant 3 atomes de carbone.

11. Alliage selon la revendication 10 caractérisé en ce que le dihydroxyphénol est le bisphénol A.

12. Alliage selon la revendication 9 caractérisé en ce que l'acide dicarboxylique aromatique présente la formule suivante :
HOOC-R''-COOH
dans laquelle R'' est selectionné parmi le groupe 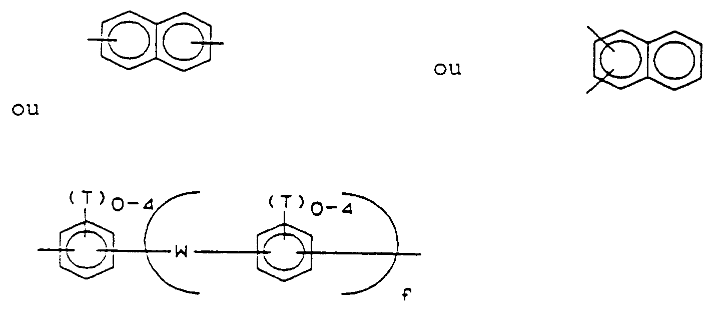 dans laquelle f vaut zéro ou 1 et W représente un O, un SO₂, un CO, un C(CH₃)₂, un CH₂, un S ou 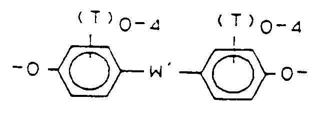 dans laquelle W' à la même signification que celle donnée à W, T est dans la formule un alkyle ayant de 1 à 6 atomes de carbone, de préférence méthyle, propyle et butyle, ou un halogène, de préférence F, Cl ou Br.

13. Alliage selon la revendication 12 caractérisé en ce que l'acide dicarboxylique aromatique est sélectionné parmi l'acide isophtalique, l'acide **téréphtalique** et leurs mélanges; et où les dérivés réactifs de l'acide sont sélectionnés parmi le dichlorure de l'acide téréphtalique, le dichlorure de l'acide isophtalique et leurs mélanges.

14. Alliage selon la revendication 9 caractérisé en ce que le précurseur de carbonate est le phosgène.

15. Alliage selon l'une ou plusieurs des revendications 9 à 14 caractérisé en ce que le polyestercarbonate est un copolymère du bisphénol A, du dichlorure de l'acide téréphtalique, du dichlorure de l'acide **isophtalique** ou des mélanges de ces deux produits et du phosgène.

16. Alliage selon l'une ou plusieurs des revendications 9 à 13 caractérisé en ce que le dihydroxyphénol est le bisphénol A, et les acides dicarboxyliques aromatiques sont l'acide téréphtalique ou l'acide isophtalique ou les mélanges de ces deux.

17. Alliage selon la revendication 1 caractérisé en ce que la polyaryléthercétone contient le motif récurrent de formule suivante 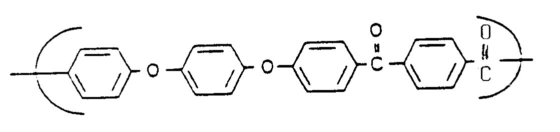 le polyimide contient le motif récurrent de formule suivante 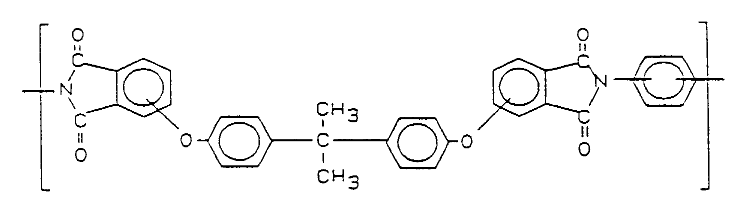 et le polyarylester contient le motif récurrent de formule suivante

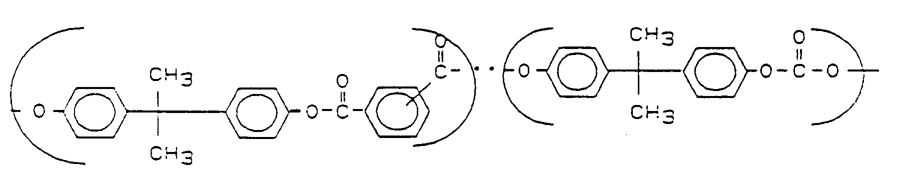

18. Alliage selon la revendication 1 caractérisé en ce que la polyaryléthercétone contient le motif récurrent de formule suivante 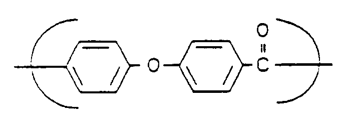 le polyimide contient le motif récurrent de formule suivante 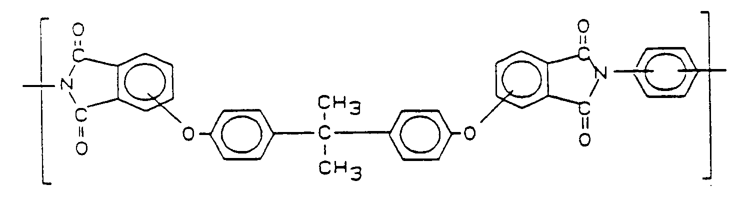 et le polyarylester contient le motif récurrent de formule suivante

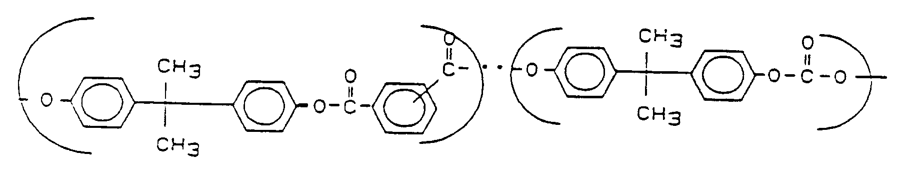

19. Alliage selon la revendication 1 caractérisé en ce que la polyaryléthercétone contient le motif récurrent de formule suivante 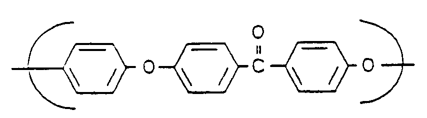 le **polyarylester** contient le motif récurrent de formule suivante 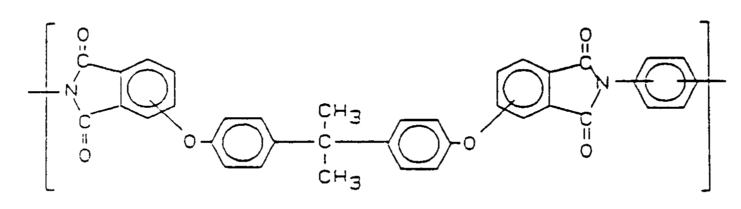 **et le polyarylester** contient le motif récurrent suivant

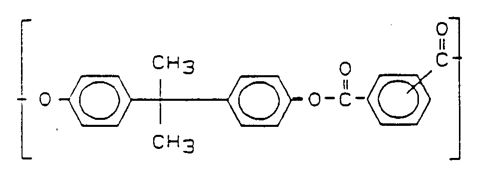

20. Utilisation d'un alliage selon l'une ou plusieurs des revendications 1 à 19 pour la préparation d'objets moulés ou comme matrice pour matériaux composite.

21. Utilisation selon la revendication 20 caractérisé en ce que des fibres de carbone ou des fibres de verre sont employées dans les matériaux composites.

22. Utilisation selon la revendication 20 pour la préparation de produits moulés par injection ou de produits extrudés sous forme de fibres, de feuilles ou de tuyaux.
